# EUROPEAN PATENT SPECIFICATION

(11) **EP 2 846 562 B1**
(45) Date of publication and mention of the grant of the patent: **24.06.2020**
(21) Application number: 13793606.8
(22) Date of filing: 20.05.2013
(51) Int. Cl.: H04W 4/02

(54) **METHOD AND APPARATUS FOR SEARCHING TERMINALS**
VERFAHREN UND VORRICHTUNG ZUR SUCHE VON ENDGERÄTEN
PROCÉDÉ ET APPAREIL DE RECHERCHE DE TERMINAUX

(30) Priority: 21.05.2012 CN 201210157847
(43) Date of publication of application: 11.03.2015
(73) Proprietor: Huawei Device Co., Ltd., Dongguan, Guangdong 523808 (CN)
(72) Inventor: GAO, Wenmei, Shenzhen Guangdong 518129 (CN); DING, Zhiming, Shenzhen Guangdong 518129 (CN); SHU, Guiming, Shenzhen Guangdong 518129 (CN); WU, Huangwei, Shenzhen Guangdong 518129 (CN); WANG, Lei, Shenzhen Guangdong 518129 (CN)
(74) Representative: Maiwald Patent- und Rechtsanwaltsgesellschaft mbH
(86) International application number: PCT/CN2013/075924
(87) International publication number: WO 2013/174246

(56) References cited:
- CN-A- 1 708 922
- CN-A- 1 957 327
- CN-A- 102 262 768
- US-A1- 2008 090 656
- US-A1- 2011 055 255
- US-A1- 2011 295 709

## Description

### TECHNICAL FIELD

The present invention relates to the field of wireless communications technologies, and in particular, to a terminal search method and apparatus.

### BACKGROUND

The Wi-Fi Direct (Wireless Fidelity Direct, wireless fidelity direct) standard refers to allowing devices on a wireless network to connect to each other without a need of a wireless router. Similar to the Bluetooth technology, this standard allows wireless devices to connect to each other in a point-to-point manner, but it improves significantly in terms of a transmission speed and a transmission distance compared with the Bluetooth technology. The Wi-Fi Direct standard is oriented at a variety of Wi-Fi (Wireless Fidelity, wireless fidelity) devices, including a computer, a mobile phone, a computer peripheral, a household appliance, and the like. A device complying with the standard can conveniently and directly connect to another device for data transmission or application sharing without a need of a hot spot or a router. The Wi-Fi Direct can support a one-to-one direct connection and can also implement simultaneous connections of multiple devices. In addition, the Wi-Fi Direct standard supports all Wi-Fi devices, from 11a/b/g to 11n, and Wi-Fi devices of different standards can also directly connect to each other.

The Bluetooth Special Interest Group (Bluetooth SIG) formally issues a new generation standard specification Bluetooth Core Specification Version 3.0 High Speed (Bluetooth Core Specification Version 3.0 High Speed). This is a new alternate radio frequency technology that allows a Bluetooth protocol to dynamically select a correct radio frequency for any task. High-speed transfer of a large amount of data by using Bluetooth 3.0 inevitably consumes more energy. However, because of introduction of an enhanced power control (EPC) mechanism and supplementation of 802.11, actual idle power consumption is significantly reduced, and therefore the Bluetooth 3.0 can be easily used for document transmission from a video recorder to a high-definition TV, from a computer to a PMP (Portable Media Player, media player), and from a UMPC (Ultra-mobile Personal Computer, ultra-mobile personal computer) to a printer.

In the prior art, Social (social) applications are all based on the LBS (Location Based Service, location based service) technology. That is, support from a mobile network and the GPS (Global Positioning System, global positioning system) is required, and support from an LBS server is required. Without relying on the support from the LBS server, a terminal cannot find another terminal that runs a same application in a local scope or an adjacent area (in a Bluetooth or Wi-Fi scope). As a result, data exchange cannot be implemented between terminals in the local scope or the adjacent area.

US 2011/0295709 A1 describes a game apparatus which executes an application and generates an application information frame that contains most-recently-used application identification (app ID) information that is identification information of the executed application. The game apparatus transmits the app ID information frame to another game apparatus where the app ID information can be displayed in order to enable the receiving game apparatus to indicate applications used by the user of the sending game apparatus. Further, detailed information about the application identified by the app ID can be displayed, together with purchasing information.

### SUMMARY

The invention is defined by the independent claims.

Aspects of the present invention provide a terminal search method and apparatus as defined by claims 1 and 2, so that a terminal can pertinently find, without support from an LBS server, another terminal that runs a same application or service, thereby implementing mobile data exchange between terminals.

The present invention adopts the following technical solutions:
A terminal search method includes:
acquiring an application identifier;
broadcasting a broadcast frame that carries the application identifier to a receiving end;
receiving a message that is sent by a candidate receiving end and carries a target application identifier, where the target application identifier is selected by the candidate receiving end from the application identifier; and
determining a target receiving end from the candidate receiving end, so as to establish a connection of a target application with the target receiving end.

A terminal search method includes:
receiving a broadcast frame that is broadcast by a sending end and carries an application identifier;
determining a target application identifier from the application identifier, where an application corresponding to the target application identifier is in an active state on a receiving end; and
sending a message that carries the target application identifier to the sending end, so as to establish a connection of the target application with the sending end.

A sending end includes an application register service module and specifically includes:
an acquiring unit, configured to acquire an application identifier;
a broadcasting unit, configured to broadcast a broadcast frame that carries the application identifier to a receiving end;
a receiving unit, configured to receive a message that is sent by a candidate receiving end and carries a target application identifier, where the target application identifier is selected by the candidate receiving end from the application identifier; and
a processing unit, configured to determine a target receiving end from the candidate receiving end, so as to establish a connection of a target application with the target receiving end.

A receiving end includes an application register service module and specifically includes:
a receiving unit, configured to receive a broadcast frame that is broadcast by a sending end and carries an application identifier;
a searching unit, configured to determine a target application identifier from the application identifier, where an application corresponding to the target application identifier is in an active state on the receiving end; and
a sending unit, configured to send a message that carries the target application identifier to the sending end, so as to establish a connection of the target application with the sending end.
In the terminal search method and apparatus provided in the embodiments of the present invention, an application identifier of a sending end is acquired; a broadcast frame that carries the application identifier is sent; a receiving end receives the broadcast frame and searches, among applications on the receiving end, for a same application that corresponds to the application identifier in the broadcast frame, where the same application is in an active state on the receiving end, and the same application identifier is a target application identifier; the sending end receives messages that are sent by candidate receiving ends and carry target application identifiers of the candidate receiving ends, and determines a target receiving end from the candidate receiving end; and the sending end establishes a connection of the target application with the target receiving end. In the embodiments of the present invention, a problem in the prior art that a terminal cannot find, without relying on support from an LBS server, another terminal that runs a same application in a local scope or an adjacent area (in a Bluetooth or Wi-Fi scope) is resolved, so that a terminal can pertinently find, without an LBS server, another terminal that runs a same application or service, thereby implementing mobile data exchange between terminals.

### BRIEF DESCRIPTION OF DRAWINGS

FIG. 1 is a flowchart of a terminal search method according to Embodiment 1 of the present invention;
FIG. 2 is a flowchart of a terminal search method according to Embodiment 1 of the present invention;
FIG. 3 is a scenario instance of Wi-Fi device discovery according to Embodiment 2 of the present invention;
FIG. 4 is a flowchart of a terminal search method according to Embodiment 2 of the present invention;
FIG. 5 is a schematic diagram of a format of a probe request frame according to Embodiment 2 of the present invention;
FIG. 6 is a structural diagram of an application identifier element in a probe request frame according to Embodiment 2 of the present invention;
FIG. 7 is a schematic diagram of content included in an application identifier structure in a probe request frame according to Embodiment 2 of the present invention;
FIG. 8 is a structural diagram of an application identifier result extended in a probe response frame according to Embodiment 2 of the present invention;
FIG. 9 is a schematic diagram of content included in an application identifier matching result structure extended in a probe response frame according to Embodiment 2 of the present invention;
FIG. 10 is a flowchart of another terminal search method according to Embodiment 2 of the present invention;
FIG. 11 is a flowchart of still another terminal search method according to Embodiment 2 of the present invention;
FIG. 12 is a flowchart of yet another terminal search method according to Embodiment 2 of the present invention;
FIG. 13 is a structural diagram of a sending end according to Embodiment 3 of the present invention;
FIG. 14 is a structural diagram of another sending end according to Embodiment 3 of the present invention;
FIG. 15 is a structural diagram of still another sending end according to Embodiment 3 of the present invention;
FIG. 16 is a structural diagram of yet another sending end according to Embodiment 3 of the present invention;
FIG. 17 is a structural diagram of yet another sending end according to Embodiment 3 of the present invention;
FIG. 18 is a structural diagram of yet another sending end according to Embodiment 3 of the present invention;
FIG. 19 is a structural diagram of a receiving end according to Embodiment 3 of the present invention;
FIG. 20 is a structural diagram of another receiving end according to Embodiment 3 of the present invention;
FIG. 21 is a structural diagram of still another receiving end according to Embodiment 3 of the present invention;
FIG. 22 is a structural diagram of yet another receiving end according to Embodiment 3 of the present invention;
FIG. 23 is a structural diagram of yet another receiving end according to Embodiment 3 of the present invention; and
FIG. 24 is a structural diagram of a searching unit in a receiving end according to Embodiment 3 of the present invention.

### DESCRIPTION OF EMBODIMENTS

The following describes a terminal search method and apparatus in embodiments of the present invention in detail with reference to accompanying drawings.

### Embodiment 1

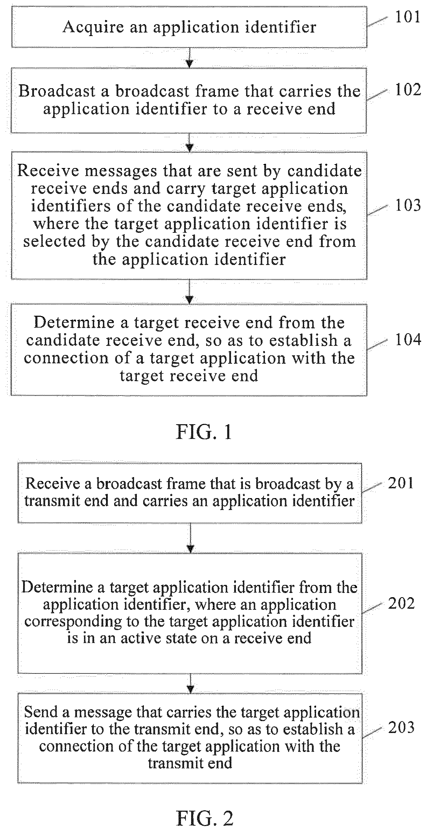

This embodiment of the present invention provides a terminal search method. As shown in FIG. 1, the method includes the following steps:
101. Acquire an application identifier.
102. Broadcast a broadcast frame that carries the application identifier to a receiving end.
103. Receive messages that are sent by candidate receiving ends and carry target application identifiers of the candidate receiving ends, where the target application identifier is selected by the candidate receiving end from the application identifier.
104. Determine a target receiving end from the candidate receiving end, so as to establish a connection of a target application with the target receiving end.

In the terminal search method provided in this embodiment of the present invention, an application identifier of a sending end is acquired; a broadcast frame that carries the application identifier is broadcast to a receiving end; the sending end receives messages that are sent by candidate receiving ends and carry target application identifiers of the candidate receiving ends, where the target application identifier is selected by the candidate receiving end from the application identifier; and the sending end determines a target receiving end from the candidate receiving end, so as to establish a connection of a target application with the target receiving end. In this embodiment of the present invention, a problem that a terminal cannot find, without relying on support from an LBS server, another terminal that runs a same application in a local scope or an adjacent area (in a Bluetooth or Wi-Fi scope) is resolved, so that a terminal can pertinently find, without support from an LBS server, another terminal that runs a same application or service, thereby implementing mobile data exchange between terminals.

This embodiment of the present invention provides another terminal search method. As shown in FIG. 2, the method includes the following steps:
201. Receive a broadcast frame that is broadcast by a sending end and carries an application identifier.
202. Determine a target application identifier from the application identifier, where an application corresponding to the target application identifier is in an active state on a receiving end.
203. Send a message that carries the target application identifier to the sending end, so as to establish a connection of the target application with the sending end.

In the terminal search method provided in this embodiment of the present invention, a receiving end receives a broadcast frame that is broadcast by a sending end and carries an application identifier; determines a target application identifier from the application identifier, where an application corresponding to the target application identifier is in an active state on the receiving end; and then sends a message that carries the target application identifier to the sending end, so as to establish a connection of the target application with the sending end. In this embodiment of the present invention, a problem in the prior art that a terminal cannot find, without relying on support from an LBS server, another terminal that runs a same application in a local scope or an adjacent area (in a Bluetooth or Wi-Fi scope) is resolved, so that a terminal can pertinently find, without support from an LBS server, another terminal that runs a same application or service, thereby implementing mobile data exchange between terminals.

### Embodiment 2

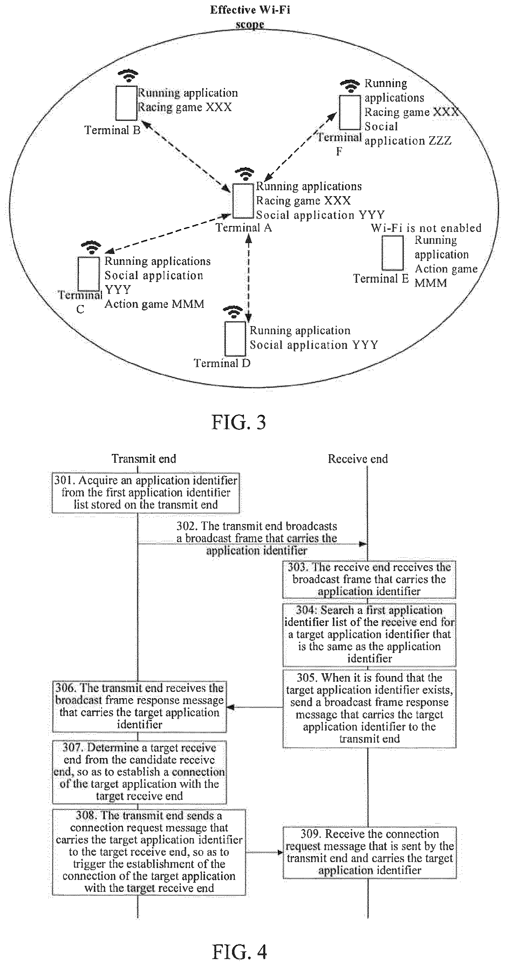

FIG. 3 shows a scenario instance of implementing Wi-Fi device discovery in the present invention. For example, in any crowded place, such as a bus, a subway train, a railway station, a shuttle, a shopping mall, a bank, a hospital, a school, and a company, a user takes out a mobile phone (terminal A) of the user, enables Wi-Fi, and starts a game/social application; and then a screen of the mobile phone automatically displays a nearby terminal (mobile phone/pad) that runs a same game/social application. The user may choose to interconnect with a certain stranger by using Wi-Fi to play an online game, join a pitched multiplayer game, or make some friends by using the social application.

This embodiment of the present invention provides a terminal search method, which is specific to a Social APP (social application), that is, a method of an APP (Application, application) supporting application/service type discovery. Data exchange can be implemented by means of application/service type discovery. A Wi-Fi application register client (Wi-Fi App Register Client, WAR-C for short) is added into a social application, and a Wi-Fi application register server (Wi-Fi App Register Server, WAR-S for short) is added into a Wi-Fi module/Wi-Fi drive of a terminal.

A WAR-S on a sending end stores a first application identifier list, where an application corresponding to each application identifier in the first application identifier list is in an active state.

When an application is started, the application automatically registers the application identifier and a process identifier corresponding to the application into the first application identifier list of the sending end by using a WAR-C on the sending end.

Alternatively, when an application is started, a user manually triggers and uses a WAR-C on the sending end to register the application identifier and a process identifier corresponding to the application into the first application identifier list of the sending end.

In addition, optionally, an application does not need to be started, and a user directly and manually registers an identifier of an application that needs to be discovered into the first application identifier list of the sending end.

Optionally, after the application successfully performs registration into the first application identifier list of the sending end, the WAR-S returns a corresponding application register success message to the WAR-C.

A receiving end also stores a first application identifier list on a WAR-S on the receiving end, where an application corresponding to each application identifier in the first application identifier list of the receiving end is in an active state. Registration of the application identifier into the first application identifier list of the receiving end is the same as that in the first application identifier list of the sending end, and details are not repeatedly described herein.

The first application identifier list of the sending end and that on the receiving end are dynamic tables and are continuously and dynamically updated according to startup of an application.

When the sending end is performing a terminal search, as shown in FIG. 4, specific steps are as follows:
301. Acquire an application identifier from the first application identifier list stored on the sending end.
302. The sending end broadcasts a broadcast frame that carries the application identifier.

It may be specifically as follows: After an application identifier is successfully registered into the first program identifier list, the sending end proactively sends a broadcast frame that includes all application identifiers in the first program identifier list, where the broadcast frame may be specifically a probe request frame (Probe Request), the probe request frame is sent periodically, and a specified number of probe request frames are consecutively sent in each period, so as to discover nearby terminals that run a same application as many as possible.

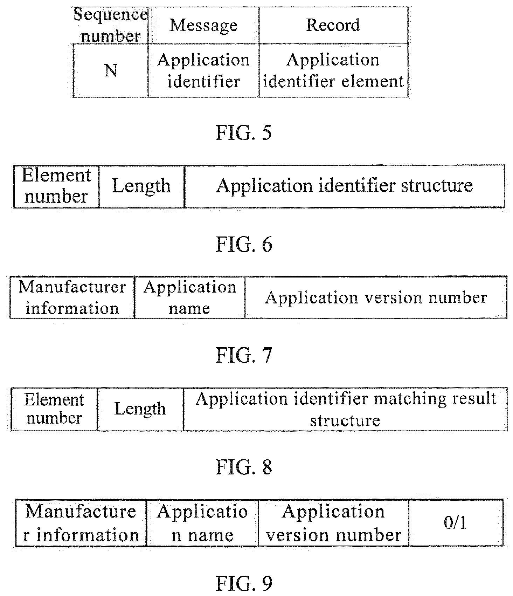

FIG. 5 shows a format of the probe request frame, including a sequence number of an application in the probe request frame, a corresponding application identifier, and an application identifier element. FIG. 6 shows a structure of the application identifier element, including a number and a length of the application identifier element and an application identifier structure. FIG. 7 shows a schematic diagram of content included in the application identifier structure, including manufacturer information, an application name, and an application version number.

303. A receiving end receives the broadcast frame that carries the application identifier.

Specifically, because the sending end sends the broadcast frame, at least one candidate receiving end receives the broadcast frame, and after receiving the broadcast frame, the candidate receiving end performs specific operations described in steps 304-305.

304: Search a first application identifier list of the receiving end for a target application identifier that is the same as the application identifier.

After receiving the probe request frame, the receiving end parses the application identifier in the probe request frame and queries whether a same application identifier exists in the first application identifier list at a local end, where the same application identifier is the target application identifier.

305. When it is found that the target application identifier exists, send a broadcast frame response message that carries the target application identifier to the sending end.

The broadcast frame response message may be specifically a probe response frame (Probe Response), where the probe response frame carries an identifier indicating that application matching succeeds. FIG. 8 shows a structure of an application identifier result extended in the probe response frame. FIG. 9 shows a schematic diagram of content included in a structure of an application identifier matching result, where 0 and 1 indicate a matching result, 1 indicates that a same application exists and matching succeeds, and 0 indicates that no same application exists and matching fails.

Meanwhile, the receiving end notifies a target application at the local end of a list of nearby terminals that run the same application.

In an embodiment, when it is found that no target application identifier exists, no response frame is returned. Certainly, the sending end may also be notified, in a manner of returning a response frame, that no target application identifier exists.

306. The sending end receives the broadcast frame response message that carries the target application identifier.

The sending end receives broadcast frame response messages sent by all candidate receiving ends and notifies the target application at the local end of a list of nearby terminals that run the same application, so that the sending end selects a target receiving end from the candidate receiving ends.

307. Determine a target receiving end from the candidate receiving end, so as to establish a connection of the target application with the target receiving end.

A user selects the target receiving end from the candidate receiving end, or the target application automatically selects the target receiving end from the candidate receiving end.

308. The sending end sends a connection request message that carries the target application identifier to the target receiving end, so as to trigger the establishment of the connection of the target application with the target receiving end.

309. Receive the connection request message that is sent by the sending end and carries the target application identifier.

It is specifically as follows: The target receiving end receives the connection request message that is sent by the sending end and carries the target application identifier, and after the connection is established successfully, the target application on two terminals can perform an online service operation.

Optionally, this embodiment further provides a method for the user to manually stop the terminal search. If the user finds that no terminal with the same application identifier is found after a period of time or sufficient terminals with the same application identifier have been found in a short period of time, the user may press a "stop" key or send an instruction similar to an instruction for stopping the terminal search. Then the WAR-C on the sending end sends an identifier of a corresponding process for stopping searching for the application to the WAR-S on the sending end, an identifier of the application for which the search is stopped is deleted from the first application identifier list, and the corresponding probe request frame no longer carries the identifier of the application for which the search is stopped.

Optionally, this embodiment further provides a processing method for keeping-alive and deregistration between a WAR-C and a WAR-S on a terminal. After an application successfully performs registration into a first application identifier list, the WAR-S on the terminal sets one corresponding timer for each application. When no keep-alive message that is sent by the WAR-C on the terminal and corresponds to the application is received after time specified by the timer is reached, it is considered that the application terminates unexpectedly. Then information related to the application is deleted from the first application identifier list. In addition, after the application successfully performs registration into the first application identifier list, the WAR-C on the terminal starts to send a keep-alive message to the WAR-S, and the WAR-S returns a response message for the keep-alive message. When the application is closed/exits or a user manually stops searching for the application, the WAR-C on the terminal initiates a deregistration request to the WAR-S, where the request carries a process identifier corresponding to the application, so as to instruct the WAR-S on the terminal to delete the information related to the application from the first application identifier list. After receiving the deregistration request, the WAR-S deletes the information related to the application from the first application identifier list and returns a deregistration success response.

In the foregoing method, Wi-Fi is used as a bearer protocol for application discovery and subsequent data transmission. Bluetooth (Bluetooth) may also be used for bearing, where a process is basically the same as a process in a Wi-Fi bearer manner. A difference lies in that an extended module in a Social APP is a BAR-C (Bluetooth Application Register Client, Bluetooth application register client), whereas an extended module in a Bluetooth module/drive is a BAR-S (Bluetooth Application Register Server, Bluetooth application register server). In addition, in an APP discovery process, LMP (Link Management Protocol, link management protocol) in a Bluetooth protocol needs to be extended. For example, an application identifier is carried in a sent LMP_host_connection_request (host connection request frame), and a target application matching identifier and a PIN (Personal Identification Number, personal identification number) that is required for Bluetooth pairing are carried in a sent LMP_Accepted (accepted response frame), so that during subsequent establishment of a Bluetooth connection, the BAR-S in the Bluetooth module can directly use a PIN code, which is obtained by parsing, to perform pairing, without a need to manually enter the PIN code.

This embodiment of the present invention further provides a terminal search method, where the method can be applied to a process of discovering an existing/legacy application (Legacy APP), and the existing application is an application that does not support a social function. In this embodiment of the present invention, a social function in a neighboring area can also be implemented for the existing application.

Similarly, a Wi-Fi application register server (Wi-Fi App Register Server, WAR-S for short) is added into a Wi-Fi module/Wi-Fi drive of a terminal.

The WAR-S on the terminal stores a second application identifier list, where a state flag is set for each application identifier in the second application identifier list, and the state flag is used to indicate whether an application is in an active state or an inactive state.

A user manually triggers registration of certain application identifiers of which data exchange is expected into the second application identifier list of the terminal; alternatively, when the terminal is delivered from a factory, a manufacturer registers certain application identifiers of which data exchange is expected into the second application identifier list of the terminal in advance, and state flags corresponding to the application identifiers are set to the inactive state (Inactive) by default, where the inactive state means that the applications are not in an active state.

When an application is started, the application registers with a process manager in an operating system of the terminal. The WAR-S on the terminal performs polling on the process manager in the operating system of the terminal to query whether the current system of the terminal runs an application that is the same as that in the second application identifier list of the terminal. If yes, a state flag, which corresponds to the same application, in the second application identifier list is set to the active state (Active), and a process identifier corresponding to the application is recorded in the second application identifier list.

The second application identifier list is a dynamic table and is continuously and dynamically updated according to registration and startup of an application.

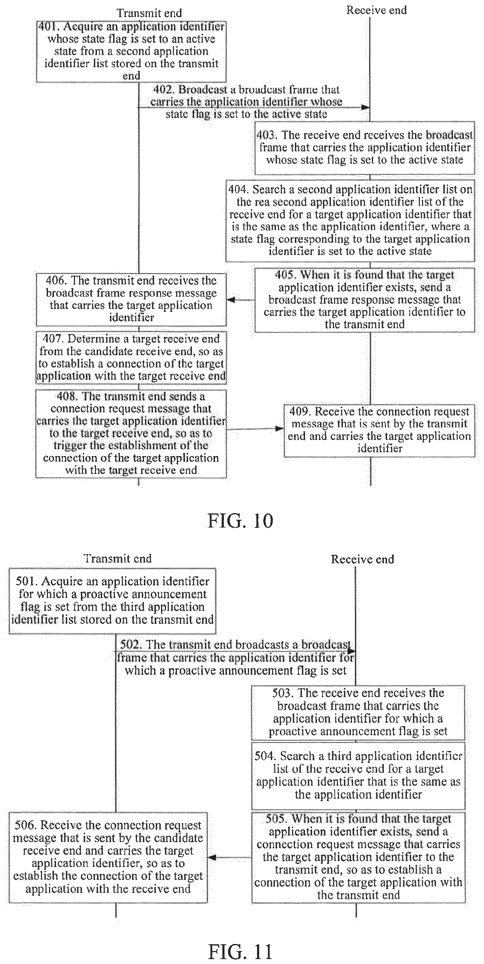

When a sending end is performing a terminal search, as shown in FIG. 10, specific steps are as follows:
401. Acquire an application identifier whose state flag is set to an active state from a second application identifier list stored on the sending end.

A user proactively triggers a device search, and the sending end receives, from the user, a discovery instruction for discovering a target application, where the instruction carries a process identifier corresponding to the target application that needs to be discovered. The sending end determines, according to the process identifier, whether the target application exists in the second application identifier list. If yes, the sending end sends a broadcast frame that carries a target application identifier.

402. The sending end broadcasts a broadcast frame that carries the application identifier whose state flag is set to the active state.

The broadcast frame may be specifically a probe request frame, the probe request frame may be sent periodically, and a specified number of probe request frames may be consecutively sent in each period, so as to discover nearby terminals that run a same application as many as possible. A format of the probe request frame is shown in FIG. 5, FIG. 6, or FIG. 7.

403. A receiving end receives the broadcast frame that carries the application identifier whose state flag is set to the active state.

Specifically, because the sending end sends the broadcast frame, at least one candidate receiving end receives the broadcast frame, and after receiving the broadcast frame, the candidate receiving end performs specific operations described in steps 404-405.

404. Search a second application identifier list of the receiving end for a target application identifier that is the same as the application identifier, where a state flag corresponding to the target application identifier is set to the active state.

After receiving the probe request frame, the receiving end parses the target application identifier in the probe request frame and queries whether the target application identifier exists in the second application identifier list at a local end, where the state flag corresponding to the target application identifier is set to the active state.

405. When it is found that the target application identifier exists, send a broadcast frame response message that carries the target application identifier to the sending end.

The broadcast frame response message is specifically a probe response frame, and its format is shown in FIG. 8 or FIG. 9. Meanwhile, the receiving end notifies a target application at the local end of a list of nearby terminals that run the same application.

In an embodiment, when it is found that no target application identifier exists, no response frame is returned.

406. The sending end receives the broadcast frame response message that carries the target application identifier.

After receiving probe response frames sent by all candidate receiving ends, the sending end notifies the target application at the local end of a list of nearby terminals that run the same application, so that the sending end selects a target receiving end from the candidate receiving ends.

407. Determine a target receiving end from the candidate receiving end, so as to establish a connection of the target application with the target receiving end.

The user selects the target receiving end from the candidate receiving end, or the target application automatically selects the target receiving end from the candidate receiving end.

408. The sending end sends a connection request message that carries the target application identifier to the target receiving end, so as to trigger the establishment of the connection of the target application with the target receiving end.

409. Receive the connection request message that is sent by the sending end and carries the target application identifier.

It is specifically as follows: The target receiving end receives the connection request message that is sent by the sending end and carries the target application identifier, and after the connection is established successfully, the target application on two terminals can perform an online service operation.

Optionally, this embodiment further provides a method for the user to manually stop the terminal search. If the user finds that no terminal with the target application identifier is found after a period of time or sufficient terminals with the target application identifier have been found in a short period of time, the user may press a "stop" key or send an instruction similar to an instruction for stopping the terminal search, so as to send an identifier of a corresponding process for stopping searching for the target application to the WAR-S on the sending end, and information related to the target application for which the search is stopped is deleted from the second application identifier list.

Optionally, this embodiment further provides a processing method for keeping-alive and deregistration of an application on a terminal. After an application successfully performs registration into a second application identifier list, a WAR-S on the terminal sets one corresponding timer for each application. When no keep-alive message that is sent by a process manager on the terminal and corresponds to the application is received after time specified by the timer is reached, it is considered that the application terminates unexpectedly. Then information related to the application is deleted from the second application identifier list. In addition, after the application successfully performs registration into an application identifier list, the process manager on the terminal starts to send a keep-alive message to the WAR-S, and the WAR-S returns a response message for the keep-alive message. When the application is closed/exits or a user manually stops application discovery, the process manager on the terminal initiates a deregistration request to the WAR-S, where the request carries a process identifier corresponding to the application, so as to instruct the WAR-S on the terminal to delete the information related to the application from the second application identifier list. After receiving the deregistration request, the WAR-S deletes the information related to the application from the application identifier list and returns a deregistration success response.

In this embodiment, Bluetooth may also be used as a bearer protocol for application discovery and subsequent data exchange.

This embodiment of the present invention further provides a terminal search method, which is specific to a Social APP, that is, a method of an application supporting application/service type discovery. A social function can be implemented by means of application/service type discovery. A Wi-Fi application register client WAR-C is added into a social application, and a Wi-Fi application register server WAR-S is added into a Wi-Fi module/Wi-Fi drive of a terminal.

A WAR-S on a sending end stores a third application identifier list, where an application corresponding to each application identifier in the third application identifier list is in an active state, and a proactive announcement flag is set for at least one application identifier in the third application identifier list.

When an application is started, the application automatically registers the application identifier, a proactive announcement flag corresponding to the application identifier, and a process identifier corresponding to the application into the third application identifier list of the sending end by using a WAR-C on the sending end.

Alternatively, when an application is started, a user manually triggers and uses a WAR-C on the sending end to register the application identifier, a proactive announcement flag corresponding to the application identifier, and a process identifier corresponding to the application into the third application identifier list of the sending end.

Optionally, after the application successfully performs registration into the third application identifier list of the sending end, the WAR-S on the sending end returns a corresponding application register success message to the WAR-C on the sending end.

A receiving end also stores a third application identifier list on a WAR-S on the receiving end, where an application corresponding to each application identifier in the third application identifier list of the receiving end is in an active state.

The third application identifier list is a dynamic table and is continuously and dynamically updated according to registration and startup of an application.

When the sending end is performing a terminal search, as shown in FIG. 11, specific steps are as follows:
501. Acquire an application identifier for which a proactive announcement flag is set from the third application identifier list stored on the sending end.
502. The sending end broadcasts a broadcast frame that carries the application identifier for which a proactive announcement flag is set.

It may be specifically as follows: After an application identifier is successfully registered into the third application identifier list, an application identifier with a proactive announcement flag in the third application identifier list is sent to a receiving end by using the broadcast frame, where the broadcast frame is sent periodically, and a specified number of broadcast frames are consecutively sent in each period, so as to discover nearby terminals that run a same application as many as possible. A format of the broadcast frame is the same as the format of the probe request frame shown in FIG. 5, FIG. 6, or FIG. 7.

503. The receiving end receives the broadcast frame that carries the application identifier for which a proactive announcement flag is set.

Specifically, because the sending end sends the broadcast frame, at least one candidate receiving end receives the broadcast frame, and after receiving the broadcast frame, the candidate receiving end performs specific operations described in steps 504-505.

504: Search a third application identifier list of the receiving end for a target application identifier that is the same as the application identifier.

After receiving the probe request frame, the receiving end parses the application identifier in the probe request frame and queries whether a same application identifier exists in the third application identifier list at a local end, where the same application identifier is the target application identifier.

Meanwhile, the receiving end notifies a target application at the local end of a list of nearby terminals that run the same application.

Optionally, after receiving the broadcast frame, the receiving end searches the third application identifier list of the receiving end for a candidate application identifier that is the same as the application identifier, and sends a unicast frame that carries the candidate application identifier to the sending end;
after receiving the unicast frame that is sent by the candidate receiving end and carries the candidate application identifier, the sending end determines a target application identifier from the candidate application identifier, where the target application identifier is included in the third application identifier list of the sending end, and then sends a unicast frame response message that carries the target application identifier to the receiving end; and
the receiving end receives the unicast frame response message that is sent by the sending end and carries the target application identifier, and acquires the target application identifier.

In addition, the sending end notifies the target application at the local end of a list of nearby terminals that run the same application, so that the sending end can learn that other terminals also run the same application.

A format of the unicast frame is the same as the format of the probe request frame shown in FIG. 5, FIG. 6, or FIG. 7, and a format of the unicast response frame is the same as the format of the probe response frame shown in FIG. 8 or FIG. 9.

505. When it is found that the target application identifier exists, send a connection request message that carries the target application identifier to the sending end, so as to establish a connection of the target application with the sending end.

A user selects a sending end from the terminal list, or the target application automatically selects a sending end from the terminal list, and sends the connection request message that carries the target application identifier to the sending end for performing connection (for example, WiFi Direct connection), so as to establish a connection of the target application with the sending end.

506. Receive the connection request message that is sent by the candidate receiving end and carries the target application identifier, so as to establish the connection of the target application with the receiving end.

After the connection is established successfully, the target application on two terminals can perform an online service operation.

Optionally, a method for the user to manually stop the terminal search may also be adopted in this embodiment. If the user finds that no terminal with the target application identifier is found after a period of time or sufficient terminals with the target application identifier have been found in a short period of time, the user may press a "stop" key or send an instruction similar to an instruction for stopping the terminal search. Then the WAR-C on the sending end sends an identifier of a corresponding process for stopping discovering the application to the WAR-S on the sending end, an identifier of the application for which the search is stopped is deleted from the third application identifier list of the sending end, and the corresponding probe request frame no longer carries the identifier of the application for which the search is stopped.

Optionally, this embodiment further provides a processing method for keeping-alive and deregistration between a WAR-C and a WAR-S on a terminal. After an application successfully performs registration into a third application identifier list, the WAR-S on the terminal sets one corresponding timer for each application. When no keep-alive message that is sent by the WAR-C on the terminal and corresponds to the application is received after time specified by the timer is reached, it is considered that the application terminates unexpectedly. Then information related to the application is deleted from the third application identifier list. In addition, after the application successfully performs registration into the third application identifier list, the WAR-C on the terminal starts to send a keep-alive message to the WAR-S, and the WAR-S returns a response message for the keep-alive message. When the application is closed/exits or a user manually stops searching for the application, the WAR-C on the terminal initiates a deregistration request to the WAR-S, where the request carries a process identifier corresponding to the application, so as to instruct the WAR-S on the terminal to delete the information related to the application from the third application identifier list. After receiving the deregistration request, the WAR-S deletes the information related to the application from the first application identifier list and returns a deregistration success response.

This embodiment of the present invention further provides a terminal search method, where the method is applied to a process of discovering an existing/legacy application (Legacy APP), and the existing application is an application that does not support a social function. In this embodiment of the present invention, a social function in a neighboring area can also be implemented for the existing application.

Similarly, a WAR-S is added into a Wi-Fi module/Wi-Fi drive of a terminal.

A WAR-S on a sending end stores a fourth application identifier list, where a state flag is set for each application identifier in the fourth application identifier list, the state flag is used to indicate whether an application is in an active state or an inactive state, and a proactive announcement flag is set for at least one application identifier in the fourth application identifier list.

A user manually triggers registration of certain application identifiers of which data exchange is expected into the fourth application identifier list of the terminal; alternatively, when the terminal is delivered from a factory, a manufacturer registers certain application identifiers of which data exchange is expected and proactive announcement flags corresponding to the application identifiers into the fourth application identifier list of the terminal in advance, and state flags corresponding to the application identifiers are set to the inactive state (Inactive) by default, where the inactive state means that the applications are not in an active state.

When an application is started, the application registers with a process manager in an operating system of the terminal. The WAR-S on the terminal performs polling on the process manager in the operating system of the terminal to query whether the current system of the terminal runs an application that is the same as that in the fourth application identifier list of the terminal. If yes, a state flag, which corresponds to the same application, in the fourth application identifier list is set to the active state (Active), and a process identifier corresponding to the application is recorded in the fourth application identifier list.

The fourth application identifier list is a dynamic table and is continuously and dynamically updated according to registration and startup of an application.

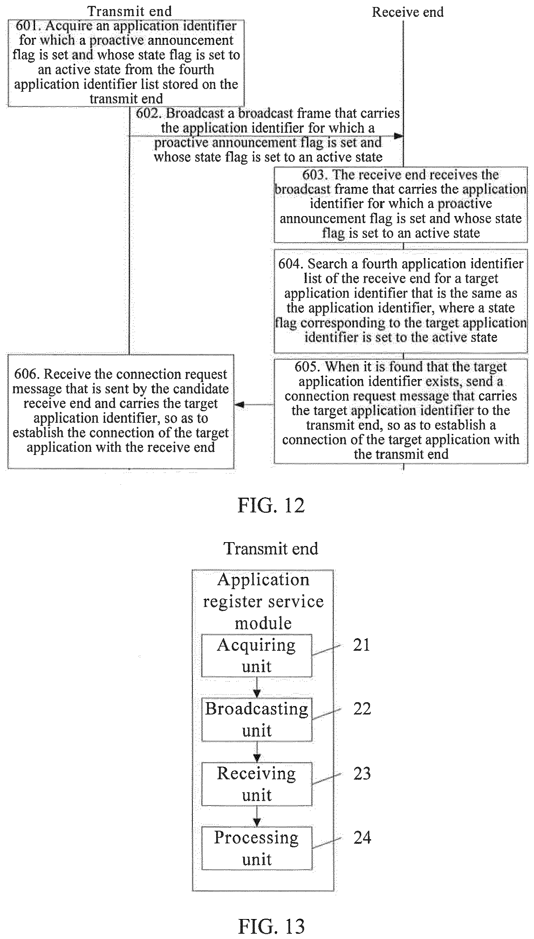

When the sending end is performing a terminal search, as shown in FIG. 12, specific steps are as follows:
601. Acquire an application identifier for which a proactive announcement flag is set and whose state flag is set to an active state from the fourth application identifier list stored on the sending end.
602. The sending end broadcasts a broadcast frame that carries the application identifier for which a proactive announcement flag is set and whose state flag is set to an active state.

The broadcast frame may be specifically a probe request frame, the probe request frame may be sent periodically, and a specified number of probe request frames may be consecutively sent in each period, so as to discover nearby terminals that run a same application as many as possible. A format of the probe request frame is shown in FIG. 5, FIG. 6, or FIG. 7.

603. A receiving end receives the broadcast frame that carries the application identifier for which a proactive announcement flag is set and whose state flag is set to an active state.

Specifically, because the sending end sends the broadcast frame, at least one candidate receiving end receives the broadcast frame, and after receiving the broadcast frame, the candidate receiving end performs specific operations described in steps 604-605.

604. Search a fourth application identifier list of the receiving end for a target application identifier that is the same as the application identifier, where a state flag corresponding to the target application identifier is set to the active state.

After receiving the probe request frame, the receiving end parses the application identifier in the probe request frame and queries whether a same application identifier exists in the fourth application identifier list at a local end, where the same application identifier is the target application identifier.

Meanwhile, the receiving end notifies a target application at the local end of a list of nearby terminals that run the same application.

Optionally, after receiving the broadcast frame, the receiving end searches the fourth application identifier list for a candidate application identifier that is the same as the application identifier, and sends a unicast frame that carries the candidate application identifier to the sending end;
after receiving the unicast frame that is sent by the candidate receiving end and carries the candidate application identifier, the sending end determines a target application identifier from the candidate application identifier, where the target application identifier is included in the fourth application identifier list of the sending end, and then sends a unicast frame response message that carries the target application identifier to the receiving end; and
the receiving end receives the unicast frame response message that is sent by the sending end and carries the target application identifier, and acquires the target application identifier.

In addition, the sending end notifies the target application at the local end of a list of nearby terminals that run the same application, so that the sending end can learn that other terminals also run the same application.

A format of the unicast frame is the same as the format of the probe request frame shown in FIG. 5, FIG. 6, or FIG. 7, and a format of the unicast response frame is the same as the format of the probe response frame shown in FIG. 8 or FIG. 9.

605. When it is found that the target application identifier exists, send a connection request message that carries the target application identifier to the sending end, so as to establish a connection of the target application with the sending end.

A user selects a sending end from the terminal list, or the target application automatically selects a sending end from the terminal list, and sends the connection request message that carries the target application identifier to the sending end for performing connection, so as to trigger the establishment of a connection of the target application with the sending end.

606. Receive the connection request message that is sent by the candidate receiving end and carries the target application identifier, so as to establish the connection of the target application with the receiving end.

After the connection is established successfully, the target application on two terminals can perform an online service operation.

Optionally, a method for the user to manually stop the terminal search may also be adopted in this embodiment. If the user finds that no terminal with the target application identifier is found after a period of time or sufficient terminals with the target application identifier have been found in a short period of time, the user may press a "stop" key or send an instruction similar to an instruction for stopping the terminal search, so as to send an identifier of a corresponding process for stopping discovering the application to the WAR-S on the sending end, and the corresponding probe request frame no longer carries an identifier of the application for which discovery is stopped.

Optionally, this embodiment further provides a processing method for keeping-alive and deregistration of an application on a terminal. After an application successfully performs registration into a fourth application identifier list, a WAR-S on the terminal sets one corresponding timer for each application. When no keep-alive message that is sent by a process manager on the terminal and corresponds to the application is received after time specified by the timer is reached, it is considered that the application terminates unexpectedly. Then information related to the application is deleted from the fourth application identifier list. In addition, after the application successfully performs registration into the fourth application identifier list, the process manager on the terminal starts to send a keep-alive message to the WAR-S, and the WAR-S returns a response message for the keep-alive message. When the application is closed/exits or a user manually stops application discovery, the process manager on the terminal initiates a deregistration request to the WAR-S, where the request carries a process identifier corresponding to the application, so as to instruct the WAR-S on the terminal to delete the information related to the application from the fourth application identifier list. After receiving the deregistration request, the WAR-S deletes the information related to the application from the application identifier list and returns a deregistration success response.

The foregoing embodiment of the present invention can be applied to an application discovery process in all short-distance wireless communications.

### Embodiment 3

This embodiment of the present invention provides a sending end, as shown in FIG. 13, including an application register service module. The sending end specifically includes an acquiring unit 21, a broadcasting unit 22, a receiving unit 23, and a processing unit 24.

The acquiring unit 21 is configured to acquire an application identifier;
the broadcasting unit 22 is configured to broadcast a broadcast frame that carries the application identifier to a receiving end;
the receiving unit 23 is configured to receive a message that is sent by a candidate receiving end and carries a target application identifier, where the target application identifier is selected by the candidate receiving end from the application identifier; and
the processing unit 24 is configured to determine a target receiving end from the candidate receiving end, so as to establish a connection of a target application with the target receiving end.

This embodiment of the present invention provides a sending end. An application identifier of the sending end is acquired; a broadcast frame that carries the application identifier is broadcast to a receiving end; the sending end receives messages that are sent by candidate receiving ends and carry target application identifiers of the candidate receiving ends, where the target application identifier is selected by the candidate receiving end from the application identifier; and the sending end determines a target receiving end from the candidate receiving end, so as to establish a connection of a target application with the target receiving end. In this embodiment of the present invention, a problem that a terminal cannot find, without relying on support from an LBS server, another terminal that runs a same application in a local scope or an adjacent area (in a Bluetooth or Wi-Fi scope) is resolved, so that another terminal that runs a same application or service can be pertinently found without support from an LBS server, thereby implementing mobile data exchange between terminals.

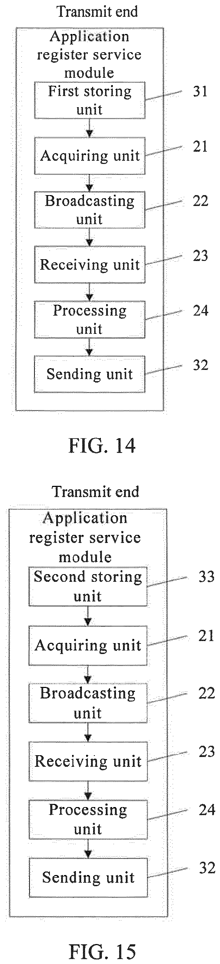

Optionally, as shown in FIG. 14, the sending end further includes a first storing unit 31.

The first storing unit is specifically configured to store a first application identifier list, where an application corresponding to each application identifier in the first application identifier list is in an active state.

The acquiring unit is specifically configured to acquire the application identifier from the first application identifier list stored on the sending end.

The receiving unit is specifically configured to receive a broadcast frame response message that is sent by the candidate receiving end and carries the target application identifier.

The sending end further includes a sending unit 32, configured to send a connection request message that carries the target application identifier to the target receiving end, so as to trigger the establishment of the connection of the target application with the target receiving end.

Optionally, as shown in FIG. 15, the sending end further includes a second storing unit 33, configured to store a second application identifier list, where a state flag is set for each application identifier in the second application identifier list, and the state flag is used to indicate whether an application is in an active state or an inactive state.

The acquiring unit is specifically configured to acquire an application identifier whose state flag is set to the active state from the second application identifier list stored on the sending end.

The receiving unit is specifically configured to receive a broadcast frame response message that is sent by the candidate receiving end and carries the target application identifier.

The sending unit is configured to send a connection request message that carries the target application identifier to the target receiving end, so as to trigger the establishment of the connection of the target application with the target receiving end.

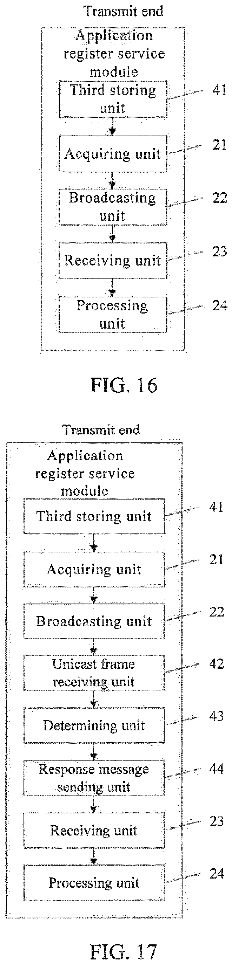

Optionally, as shown in FIG. 16, the sending end further includes a third storing unit 41, configured to store a third application identifier list, where an application corresponding to each application identifier in the third application identifier list is in an active state, and a proactive announcement flag is set for at least one application identifier in the third application identifier list.

The acquiring unit is specifically configured to acquire an application identifier for which a proactive announcement flag is set from the third application identifier list stored on the sending end.

The receiving unit is specifically configured to receive a connection request message that is sent by the candidate receiving end and carries the target application identifier.

Optionally, as shown in FIG. 17, the sending end further includes:
a unicast frame receiving unit 42, configured to receive a unicast frame that is sent by the candidate receiving end and carries a candidate application identifier;
a determining unit 43, configured to determine a target application identifier from the candidate application identifier, where the target application identifier is included in the third application identifier list, or included in the fourth application list, and a state flag corresponding to the target application identifier is set to the active state; and
a response message sending unit 44, configured to send a unicast frame response message that carries the target application identifier to the candidate receiving end.

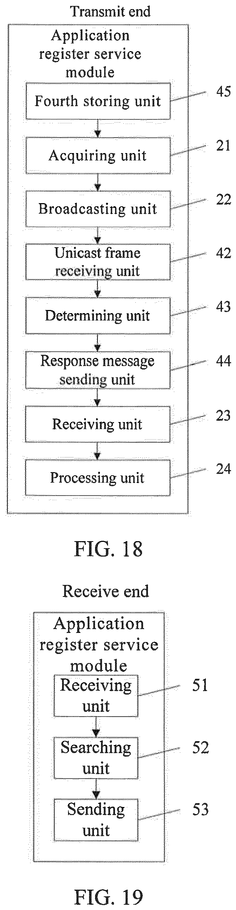

Optionally, as shown in FIG. 18, the sending end further includes a fourth storing unit 45, configured to store a fourth application identifier list, where a state flag is set for each application identifier in the fourth application identifier list, the state flag is used to indicate whether an application is in an active state or an inactive state, and a proactive announcement flag is set for at least one application identifier in the fourth application identifier list.

The acquiring unit is specifically configured to acquire an application identifier for which a proactive announcement flag is set and whose state flag is set to the active state from the fourth application identifier list stored on the sending end.

The receiving unit is specifically configured to receive a connection request message that is sent by the candidate receiving end and carries the target application identifier.

The unicast frame receiving unit is configured to receive a unicast frame that is sent by the candidate receiving end and carries a candidate application identifier.

The determining unit is configured to determine a target application identifier from the candidate application identifier, where the target application identifier is included in the third application identifier list, or included in the fourth application list, and a state flag corresponding to the target application identifier is set to the active state.

The response message sending unit is configured to send a unicast frame response message that carries the target application identifier to the candidate receiving end.

Accordingly, this embodiment of the present invention further provides a receiving end, as shown in FIG. 19, including an application register service module. The receiving end specifically includes a receiving unit 51, a searching unit 52, and a sending unit 53.

The receiving unit 51 is configured to receive a broadcast frame that is broadcast by a sending end and carries an application identifier;
the searching unit 52 is configured to determine a target application identifier from the application identifier, where an application corresponding to the target application identifier is in an active state on the receiving end; and
the sending unit 53 is configured to send a message that carries the target application identifier to the sending end, so as to establish a connection of the target application with the sending end.

This embodiment of the present invention provides a receiving end. The receiving end receives a broadcast frame that is broadcast by a sending end and carries an application identifier, determines a target application identifier from the application identifier, where an application corresponding to the target application identifier is in an active state on the receiving end, and then sends a message that carries the target application identifier to the sending end, so as to establish a connection of the target application with the sending end. In this embodiment of the present invention, a problem in the prior art that a terminal cannot find, without relying on support from an LBS server, another terminal that runs a same application in a local scope or an adjacent area (in a Bluetooth or Wi-Fi scope) is resolved, so that a terminal can pertinently find, without support from an LBS server, another terminal that runs a same application or service, thereby implementing mobile data exchange between terminals.

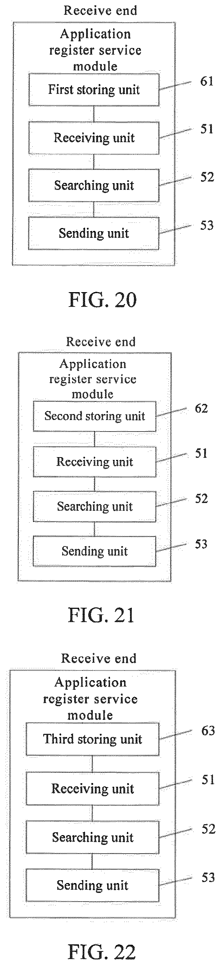

Optionally, as shown in FIG. 20, the receiving end further includes a first storing unit 61.

The first storing unit is specifically configured to store a first application identifier list, where an application corresponding to each application identifier in the first application identifier list is in an active state.

The searching unit is specifically configured to search the first application list for a target application identifier that is the same as the application identifier.

The sending unit is specifically configured to send a broadcast frame response message that carries the target application identifier to the sending end.

The receiving unit is further configured to receive a connection request message that is sent by the sending end and carries the target application identifier.

Optionally, as shown in FIG. 21, the receiving end further includes a second storing unit 62, configured to store a second application identifier list, where a state flag is set for each application identifier in the second application identifier list, and the state flag is used to indicate whether an application is in an active state or an inactive state.

The searching unit is specifically configured to search the second application identifier list for a target application identifier that is the same as the application identifier, where a state flag corresponding to the target application identifier is set to the active state.

The sending unit is specifically configured to send a broadcast frame response message that carries the target application identifier to the sending end.

The receiving unit is further configured to receive a connection request message that is sent by the sending end and carries the target application identifier.

Optionally, as shown in FIG. 22, the receiving end further includes a third storing unit 63, configured to store a third application identifier list, where an application corresponding to each application identifier in the third application identifier list is in an active state.

The searching unit is specifically configured to search the third application identifier list for a target application identifier that is the same as the application identifier.

The sending unit is specifically configured to send a connection request message that carries the target application identifier to the sending end.

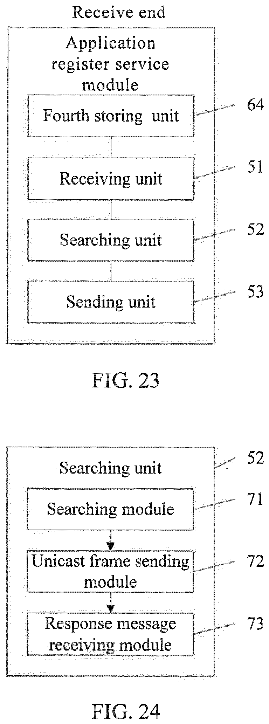

Optionally, as shown in FIG. 23, the receiving end further includes a fourth storing unit 64, configured to store a fourth application identifier list, where a state flag is set for each application identifier in the fourth application identifier list, and the state flag is used to indicate whether an application is in an active state or an inactive state.

The searching unit is specifically configured to search the fourth application identifier list for a target application identifier that is the same as the application identifier, where a state flag corresponding to the target application identifier is set to the active state.

The sending unit is specifically configured to send a connection request message that carries the target application identifier to the sending end.

Optionally, as shown in FIG. 24, the searching unit in FIG. 22 and FIG. 23 further includes a searching module 71, a unicast frame sending module 72, and a response message receiving module 73.

The searching module 71 is configured to search the third application identifier list for a candidate application identifier that is the same as the application identifier; or configured to search the fourth application identifier list for a candidate application identifier that is the same as the application identifier, where a state flag corresponding to the candidate application identifier is set to the active state;
the unicast frame sending module 72 is configured to send a unicast frame that carries the candidate application identifier to the sending end; and
the response message receiving module 73 is configured to receive a unicast frame response message that is sent by the sending end and carries a target application identifier, and acquire the target application identifier.

In addition, each technology, system, apparatus, and method that are described in the foregoing embodiments and technical features described in the embodiments can be combined to form other modules, methods, apparatuses, systems, and technologies without departing from the principle of the present invention. These modules, methods, apparatuses, systems, and technologies formed by means of combination according to the description of the embodiments of the present invention shall fall within the protection scope of the present invention.

Apparently, a person skilled in the art should understand that each of the foregoing units or steps in the present invention can be implemented by using a general computing apparatus. They can be centralized on a single computing apparatus or distributed on a network formed by multiple computing apparatuses. Optionally, they can be implemented by using program code that can be executed by a computing apparatus, and therefore they can be stored in a storage apparatus and executed by the computing apparatus. Alternatively, they are manufactured into various circuit modules, or multiple units or steps of them are manufactured into a single circuit module for implementation. In this way, the present invention is not limited to any specific combination of hardware and software.

The foregoing description is merely specific implementation manners of the present invention, but is not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A terminal search method for a sending end, comprising:
acquiring an application identifier;
broadcasting a broadcast frame that carries the application identifier to a receiving end;
receiving messages that are sent by a candidate receiving end and carry a target application identifier, wherein the target application identifier is selected by the candidate receiving end from the application identifier; and
determining a target receiving end from the candidate receiving end, so as to establish a connection of a target application with the target receiving end;
**characterized in that** the sending end stores a first application identifier list, and an application corresponding to each application identifier in the first application identifier list is in an active state; and the acquiring an application identifier comprises:
acquiring the application identifier from the first application identifier list;
or wherein the sending end stores a second application identifier list, a state flag is set for each application identifier in the second application identifier list, and the state flag is used to indicate whether an application is in an active state or an inactive state, and the acquiring an application identifier comprises:
acquiring an application identifier whose state flag is set to the active state from the second application identifier list; and
after the determining a target receiving end from the candidate receiving end, the method further comprising: sending a connection request message that carries the target application identifier to the target receiving end, so as to trigger the establishment of the connection of the target application with the target receiving end.

2. A terminal search apparatus comprising a sending end configured to perform the method according to claim 1 and a receiving end, comprising an application register service module and specifically comprising:
a receiving unit, configured to receive a broadcast frame that is broadcast by a sending end and carries an application identifier;
a searching unit, configured to determine a target application identifier from the application identifier, wherein an application corresponding to the target application identifier is in an active state on the receiving end; and
a sending unit, configured to send a message that carries the target application identifier to the sending end, so as to establish a connection of the target application with the sending end, **characterized in that** the receiving end further comprises a first storing unit, configured to store a first application identifier list, and an application corresponding to each application identifier in the first application identifier list is in an active state; and
the searching unit is specifically configured to search the first application list for a target application identifier that is the same as the application identifier; or
wherein the receiving end further comprises a second storing unit, configured to store a second application identifier list, a state flag is set for each application identifier in the second application identifier list, and the state flag is used to indicate whether an application is in an active state or an inactive state; and
the searching unit is specifically configured to search the second application identifier list for a target application identifier that is the same as the application identifier, wherein a state flag corresponding to the target application identifier is set to the active state.

3. The terminal search apparatus according to claim 2, wherein the receiving end further comprises a third storing unit, configured to store a third application identifier list, and an application corresponding to each application identifier in the third application identifier list is in an active state; and
the searching unit is specifically configured to search the third application identifier list for a target application identifier that is the same as the application identifier.

4. The terminal search apparatus according to claim 2, wherein the receiving end further comprises a fourth storing unit, configured to store a fourth application identifier list, a state flag is set for each application identifier in the fourth application identifier list, and the state flag is used to indicate whether an application is in an active state or an inactive state; and
the searching unit is specifically configured to search the fourth application identifier list for a target application identifier that is the same as the application identifier, wherein a state flag corresponding to the target application identifier is set to the active state.

5. The terminal search apparatus according to claim 3 or 4, wherein the searching unit comprises:
a searching module, configured to search the third application identifier list for a candidate application identifier that is the same as the application identifier; or configured to search the fourth application identifier list for a candidate application identifier that is the same as the application identifier, wherein a state flag corresponding to the candidate application identifier is set to the active state;
a unicast frame sending module, configured to send a unicast frame that carries the candidate application identifier to the sending end; and
a response message receiving module, configured to receive a unicast frame response message that is sent by the sending end and carries the target application identifier, and acquire the target application identifier.

## Patentansprüche

1. Endgerätesuchverfahren für ein Sendeende, umfassend:
Beschaffen einer Anwendungskennung;
Rundsenden eines Rundsenderahmens, der die Anwendungskennung führt, zu einem Empfangsende;
Empfangen von Nachrichten, die durch ein Kandidaten-Empfangsende gesendet werden und eine Zielanwendungskennung führen, wobei die Zielanwendungskennung durch das Kandidaten-Empfangsende aus der Anwendungskennung ausgewählt wird; und
Bestimmen eines Ziel-Empfangsendes aus dem Kandidaten-Empfangsende, um so eine Verbindung einer Zielanwendung mit dem Ziel-Empfangsende herzustellen;
**dadurch gekennzeichnet, dass** das Sendeende eine erste Anwendungskennungsliste speichert und eine jeder Anwendungskennung in der ersten Anwendungskennungsliste entsprechende Anwendung sich in einem Aktiv-Zustand befindet; und das Beschaffen einer Anwendungskennung Folgendes umfasst:
Beschaffen der Anwendungskennung aus der ersten Anwendungskennungsliste;
oder wobei das Sendeende eine zweite Anwendungskennungsliste speichert, für jede Anwendungskennung in der zweiten Anwendungskennungsliste ein Zustands-Flag gesetzt wird und mit dem Zustands-Flag angegeben wird, ob sich eine Anwendung in einem Aktiv-Zustand oder einem Inaktiv-Zustand befindet, und das Beschaffen einer Anwendungskennung Folgendes umfasst:
Beschaffen einer Anwendungskennung, deren Zustands-Flag auf den Aktiv-Zustand gesetzt ist, aus der zweiten Anwendungskennungsliste; und
wobei das Verfahren nach dem Bestimmen eines Ziel-Empfangsendes aus dem Kandidaten-Empfangsende ferner Folgendes umfasst:
Senden einer Verbindungsanforderungsnachricht, die die Ziel-Anwendungskennung führt, zu dem Ziel-Empfangsende, um so die Herstellung der Verbindung der ZielAnwendung mit dem Ziel-Empfangsende auszulösen.

2. Endgerätesuchvorrichtung, umfassend ein Sendeende, ausgelegt zum Ausführen des Verfahrens nach Anspruch 1, und ein Empfangsende, das ein Anwendungsregister-Dienstmodul umfasst und speziell Folgendes umfasst:
eine Empfangseinheit, ausgelegt zum Empfangen eines Rundsenderahmens, der durch ein Sendeende rundgesendet wird und eine Anwendungskennung führt;
eine Sucheinheit, ausgelegt zum Bestimmen einer Ziel-Anwendungskennung aus der Anwendungskennung, wobei sich eine der Ziel-Anwendungskennung entsprechende Anwendung auf dem Empfangsende in einem Aktiv-Zustand befindet; und
eine Sendeeinheit, ausgelegt zum Senden einer Nachricht, die die Ziel-Anwendungskennung führt, zu dem Sendeende, um so eine Verbindung der ZielAnwendung mit dem Sendeende herzustellen, **dadurch gekennzeichnet, dass** das Empfangsende ferner Folgendes umfasst: eine erste Speichereinheit, ausgelegt zum Speichern einer ersten Anwendungskennungsliste, und wobei sich eine jeder Anwendungskennung in der ersten Anwendungskennungsliste entsprechende Anwendung in einem Aktiv-Zustand befindet; und
die Sucheinheit speziell ausgelegt ist zum Durchsuchen der ersten Anwendungsliste nach einer Ziel-Anwendungskennung, die dieselbe wie die Anwendungskennung ist; oder
wobei das Empfangsende ferner eine zweite Speichereinheit, ausgelegt zum Speichern einer zweiten Anwendungskennungsliste, umfasst, wobei ein Zustands-Flag für jede Anwendungskennung in der zweiten Anwendungskennungsliste gesetzt ist und mit dem Zustands-Flag angegeben wird, ob sich eine Anwendung in einem Aktiv-Zustand oder einem Inaktiv-Zustand befindet; und
die Sucheinheit speziell ausgelegt ist zum Durchsuchen der zweiten Anwendungskennungsliste nach einer Ziel-Anwendungskennung, die dieselbe wie die Anwendungskennung ist, wobei ein der Ziel-Anwendungskennung entsprechendes Zustands-Flag auf den Aktiv-Zustand gesetzt ist.

3. Endgerätesuchvorrichtung nach Anspruch 2, wobei das Empfangsende ferner eine dritte Speichereinheit, ausgelegt zum Speichern einer dritten Anwendungskennungsliste, umfasst und wobei sich eine jeder Anwendungskennung in der dritten Anwendungskennungsliste entsprechende Anwendung in einem Aktiv-Zustand befindet; und
die Sucheinheit speziell ausgelegt ist zum Durchsuchen der dritten Anwendungskennungsliste nach einer Ziel-Anwendungskennung, die dieselbe wie die Anwendungskennung ist.

4. Endgerätesuchvorrichtung nach Anspruch 2, wobei das Empfangsende ferner eine vierte Speichereinheit, ausgelegt zum Speichern einer vierten Anwendungskennungsliste, umfasst, wobei für jede Anwendungskennung in der vierten Anwendungskennungsliste ein Zustands-Flag gesetzt wird und mit dem Zustands-Flag angegeben wird, ob sich eine Anwendung in einem Aktiv-Zustand oder einem Inaktiv-Zustand befindet; und
die Sucheinheit speziell ausgelegt ist zum Durchsuchen der vierten Anwendungskennungsliste nach einer Ziel-Anwendungskennung, die dieselbe wie die Anwendungskennung ist, wobei ein der Ziel-Anwendungskennung entsprechendes Zustands-Flag auf den Aktiv-Zustand gesetzt ist.

5. Endgerätesuchvorrichtung nach Anspruch 3 oder 4, wobei die Sucheinheit Folgendes umfasst:
ein Suchmodul, ausgelegt zum Durchsuchen der dritten Anwendungskennungsliste nach einer Kandidaten-Anwendungskennung, die dieselbe wie die Anwendungskennung ist; oder ausgelegt zum Durchsuchen der vierten Anwendungskennungsliste nach einer Kandidaten-Anwendungskennung, die dieselbe wie die Anwendungskennung ist, wobei ein der Kandidaten-Anwendungskennung entsprechendes Zustands-Flag auf den Aktiv-Zustand gesetzt ist;
ein Unicast-Rahmensendemodul, ausgelegt zum Senden eines Unicast-Rahmens, der die Kandidaten-Anwendungskennung führt, zu dem Sendeende; und
ein Antwortnachrichten-Empfangsmodul, ausgelegt zum Empfangen einer Unicast-Rahmenantwortnachricht, die durch das sendende Ende gesendet wird und die Ziel-Anwendungskennung führt, und Beschaffen der Ziel-Anwendungskennung.

## Revendications

1. Procédé de recherche de terminal destiné à une extrémité émettrice, comprenant :
l'acquisition d'un identifiant d'application ;
la diffusion d'une trame de diffusion qui achemine l'identifiant d'application à une extrémité réceptrice ;
la réception de messages qui sont envoyés par une extrémité réceptrice candidate et acheminent un identifiant d'application cible, l'identifiant d'application cible étant sélectionné par l'extrémité réceptrice candidate à partir de l'identifiant d'application ; et
la détermination d'une extrémité réceptrice cible à partir de l'extrémité réceptrice candidate, de façon à établir une connexion d'une application cible avec l'extrémité réceptrice cible ;
**caractérisé en ce que** l'extrémité émettrice stocke une première liste d'identifiants d'applications, et une application correspondant à chaque identifiant d'application dans la première liste d'identifiants d'applications se trouve dans un état actif; et
l'acquisition d'un identifiant d'application comprend :
l'acquisition de l'identifiant d'application à partir de la première liste d'identifiants d'applications ;
ou dans lequel l'extrémité émettrice stocke une seconde liste d'identifiants d'applications, un drapeau d'état est défini pour chaque identifiant d'application dans la seconde liste d'identifiants d'applications, et le drapeau d'état est utilisé pour indiquer si une application se trouve dans un état actif ou un état inactif, et l'acquisition d'un identifiant d'application comprend :
l'acquisition d'un identifiant d'application dont le drapeau d'état est défini sur l'état actif à partir de la seconde liste d'identifiants d'applications ; et
après la détermination d'une extrémité réceptrice cible à partir de l'extrémité réceptrice candidate, le procédé comprenant en outre :
l'envoi d'un message de demande de connexion qui achemine l'identifiant d'application cible à l'extrémité réceptrice cible, de façon à déclencher l'établissement de la connexion de l'application cible avec l'extrémité réceptrice cible.

2. Appareil de recherche de terminal comprenant une extrémité émettrice configurée pour mettre en oeuvre le procédé selon la revendication 1 et une extrémité réceptrice, comprenant un module de services d'enregistrement d'application et comprenant spécifiquement :
une unité de réception, configurée pour recevoir une trame de diffusion qui est diffusée par une extrémité émettrice et achemine un identifiant d'application ;
une unité de recherche, configurée pour déterminer un identifiant d'application cible à partir de l'identifiant d'application, une application correspondant à l'identifiant d'application cible se trouvant dans un état actif sur l'extrémité réceptrice ; et
une unité d'envoi, configurée pour envoyer un message qui achemine l'identifiant d'application cible à l'extrémité émettrice, de façon à établir une connexion de l'application cible avec l'extrémité émettrice, **caractérisé en ce que** l'extrémité émettrice comprend en outre une première unité de stockage, configurée pour stocker une première liste d'identifiants d'applications, et une application correspondant à chaque identifiant d'application dans la première liste d'identifiants d'applications se trouve dans un état actif ; et
l'unité de recherche est configurée spécifiquement pour rechercher la première liste d'applications pour un identifiant d'application cible qui est le même que l'identifiant d'application ; ou
dans lequel l'extrémité réceptrice comprend en outre une seconde unité de stockage, configurée pour stocker une seconde liste d'identifiants d'applications, un drapeau d'état est défini pour chaque identifiant d'application dans la seconde liste d'identifiants d'applications, et le drapeau d'état est utilisé pour indiquer si une application se trouve dans un état actif ou un état inactif ; et
l'unité de recherche est configurée spécifiquement pour rechercher la seconde liste d'identifiants d'applications pour un identifiant d'application cible qui est le même que l'identifiant d'application, un drapeau d'état correspondant à l'identifiant d'application cible étant défini sur l'état actif.

3. Appareil de recherche de terminal selon la revendication 2, dans lequel l'extrémité réceptrice comprend en outre une troisième unité de stockage, configurée pour stocker une troisième liste d'identifiants d'applications et une application correspondant à chaque identifiant d'application dans la troisième liste d'identifiants d'applications se trouve dans un état actif ; et
l'unité de recherche est configurée spécifiquement pour rechercher la troisième liste d'identifiants d'applications pour un identifiant d'application cible qui est le même que l'identifiant d'application.

4. Appareil de recherche de terminal selon la revendication 2, dans lequel l'extrémité réceptrice comprend en outre une quatrième unité de stockage, configurée pour stocker une quatrième liste d'identifiants d'applications, un drapeau d'état est défini pour chaque identifiant d'application dans la quatrième liste d'identifiants d'applications, et le drapeau d'état est utilisé pour indiquer si une application se trouve dans un état actif ou un état inactif ; et
l'unité de recherche est configurée spécifiquement pour rechercher la quatrième liste d'identifiants d'applications pour un identifiant d'application cible qui est le même que l'identifiant d'application, un drapeau d'état correspondant à l'identifiant d'application cible étant défini sur l'état actif.

5. Appareil de recherche de terminal selon la revendication 3 ou 4, dans lequel l'unité de recherche comprend :
un module de recherche, configuré pour rechercher la troisième liste d'identifiants d'applications pour un identifiant d'application candidat qui est le même que l'identifiant d'application ; ou configuré pour rechercher la quatrième liste d'identifiants d'applications pour un identifiant d'application candidat qui est le même que l'identifiant d'application, un drapeau d'état correspondant à l'identifiant d'application candidat étant défini sur l'état actif ;
un module d'envoi de trame d'unidiffusion, configuré pour envoyer une trame d'unidiffusion qui achemine l'identifiant d'application candidat à l'extrémité émettrice ; et
un module de réception de messages de réponse, conçu pour recevoir un message de réponse de trame d'unidiffusion qui est envoyé par l'extrémité émettrice et achemine l'identifiant d'application cible, et acquérir l'identifiant d'application cible.
